# EUROPÄISCHE PATENTSCHRIFT

(11) **EP 1 717 143 B1**
(45) Veröffentlichungstag und Bekanntmachung des Hinweises auf die Patenterteilung: **22.10.2008**
(21) Anmeldenummer: 05009313.7
(22) Anmeldetag: 28.04.2005
(51) Int. Cl.: B64C 1/40

(54) **Schalldämmmaterial für die Dämmung in Flugzeugen**
Aircraft sound attenuation material
Matière d'insonorisation pour avions

(43) Veröffentlichungstag der Anmeldung: 02.11.2006
(73) Patentinhaber: Lufthansa Technik AG, 22335 Hamburg (DE)
(72) Erfinder: Gröning, Malte, 20099 Hamburg (DE)
(74) Vertreter: Glawe, Delfs, Moll

(56) Entgegenhaltungen:
- US-A- 4 488 619
- US-A- 4 940 112
- US-A- 5 565 254
- US-B1- 6 358 591

## Beschreibung

Die Erfindung betrifft ein Schalldämmmaterial für die Dämmung in Flugzeugen, mit wenigstens einer Barriereschicht und wenigstens einer Absorptionsschicht.

In der Kabine von Verkehrsflugzeugen mit Strahltriebwerken herrscht während des Fluges ein verhältnismäßig hohes Geräuschniveau, das maßgeblich auf die Strömungsgeräusche an der Außenhaut vorbeiströmender und dabei teilweise verwirbelter Luft sowie auf Triebwerksgeräusche zurückgeht. Grundsätzlich ist es möglich, Schalldämmmaterial vorzusehen, insbesondere an der Außenhaut eines Flugzeuges. Bei Business- oder VIP-Jets wird eine solche Schalldämmung regelmäßig vorgesehen, nicht jedoch bei kommerziellen Verkehrsflugzeugen, bei denen eine Verminderung der Nutzlast durch das Schalldämmmaterial in der Regel wirtschaftlich nicht hinnehmbar ist.

Aus Dokument US 4,940,112 ist ein universell einsetzbares mehrlagiges Dämmmaterial u.a. für Flugzeuge bekannt. Das Dämmmaterial besteht aus einer feuerfesten Außenschicht, einer ersten offenzelligen Absorptionsschicht, einer feuerhemmenden Silikonschicht, die auch als Barriereschicht fungieren soll, und einer zweiten offenzelligen Absorptionsschicht. Die Barriereschicht aus Silikon weist eine spezifische Dichte zwischen 1,78 und 2,85 auf.

Dokument US 6,358,591 beschreibt ein Isolationsmaterial aus einer Barriere- und einer feuerfesten Dämmschicht. Die beiden Schichten sind von einer Schutzhülle umgeben.

Der Erfindung liegt die Aufgabe zugrunde, ein verbessertes Schalldämmmaterial für die Dämmung in Flugzeugen zu schaffen, das bei geringem Gewicht eine wirkungsvolle Schalldämmung insbesondere von Strömungsschall vorbeiströmender Luft ermöglicht.

Das erfindungsgemäße Schalldämmmaterial mit wenigstens einer Barriereschicht und wenigstens einer Absorptionsschicht, wobei die Barriereschicht ein Elastomermaterial mit einem Flächengewicht von 1,3 kg/m² oder weniger aufweist, die Absorptionsschicht ein poröses und/oder offenzelliges Material mit einem Volumengewicht von 4 bis 50 kg/m³, vorzugsweise 10 bis 40 kg/m³, weiter vorzugsweise 15 bis 35 kg/m³, weiter vorzugsweise 20 bis 30 kg/m³ aufweist, das Flächengewicht des Schalldämmmaterials 2 kg/m² oder weniger beträgt und die Barriereschicht eine spezifische Dichte zwischen 1 und 1,3 aufweist.

Das erfindungsgemäße Material ist mehrschichtig aufgebaut und weist wenigstens zwei Schichten auf. Die Barriereschicht weist ein Elastomermaterial, insbesondere einen elastomeren Kunststoff, mit einer spezifischen Dichte von wenigstens 1 und einem Flächengewicht von 1 kg/m² oder weniger auf. Das Schalldämmmaterial insgesamt weist eine Flexibilität auf, die ausreichend ist, um es am vorgesehenen Anbringungsort im Flugzeug (insbesondere an der Außenwand) anzubringen und dort etwaigen Krümmungen der Außenwand Folge zu leisten. Das Elastomermaterial weist eine verhältnismäßig hohe spezifische Dichte auf und dient damit als Barriereschicht für auftreffenden Schall.

Das Schalldämmaterial weist ferner eine Schallabsorptionsschicht mit einem porösen und/oder offenzelligen Material auf. Dieses Material hat ein sehr geringes Volumengewicht von 4 bis 15 kg/m³. Porös und/oder offenzellig bedeutet, dass das Material in Verbindung mit der Oberfläche stehende Hohlräume aufweist, beispielsweise kann es sich um einen Schaumstoff oder um ein Fasermaterial handeln.

Das Flächengewicht des gesamten Schalldämmmaterials beträgt erfindungsgemäß 2 kg/m² oder weniger.

Die Erfindung hat erkannt, dass eine wirksame Schalldämmung möglich ist, ohne dass das Schalldämmmaterial eine bisher für erforderlich gehaltene große Masse und damit ein hohes Flächengewicht aufweisen muss. Es reicht erfindungsgemäß aus, wenn die Barriereschicht eine verhältnismäßig hohe Dichte von wenigstens 1 hat, aber sehr dünn ausgebildet ist, so dass ein Flächengewicht von 1,3 kg/m² nicht überschritten wird. Vorzugsweise beträgt das Flächengewicht 1,1 kg/m² oder weniger. Ein bevorzugter Bereich des Flächengewichts der Barriereschicht ist 0,8 bis 1,2 kg/m².

Die Barriereschicht wird erfindungsgemäß kombiniert mit einer Absorptionsschicht mit einem sehr geringen Volumengewicht im Bereich 4 bis 50 kg/m³.

Die erfindungsgemäße dünne Barriereschicht kombiniert mit der Absorptionsschicht mit sehr geringer Dichte ergibt eine hinreichend gute Schalldämmung bei einem insgesamt sehr geringen Flächengewicht des Schalldämmmaterials. Das Schalldämmmaterial eignet sich besonders für die Dämmung des vorderen Bereichs der Kabine von Verkehrsflugzeugen, in dem üblicherweise die First- oder Business-Class untergebracht ist. Der Störschallpegel im vorderen Bereich der Kabine wird in aller Regel nur in geringem Maße von den Triebwerksgeräuschen bestimmt, die bei üblichen Verkehrsflugzeugen ja an den Tragflächen und/oder im Bereich des Hecks aufgehängt sind. Der wesentliche Teil des Störschalls wird vielmehr durch Strömungsgeräusche vorbeiströmender Außenluft verursacht. Die Frequenz dieser Strömungsgeräusche liegt insbesondere im Bereich 0,5 bis 8 kHz, in diesem Frequenzbereich weist das erfindungsgemäße Schalldämmmaterial eine besonders gute Dämmung auf. Die Frequenz des von Triebwerken verursachten Störschälls ist in der Regel deutlich geringer. Die Erfindung beruht somit auch auf der Erkenntnis, dass das erfindungsgemäße Schalldämmmaterial insbesondere geeignet ist zur Dämmung von Störschall im Frequenzbereich 0,5 bis 8 kHz, und dass hier für eine wirkungsvolle Dämmung nicht die hohe Masse bzw. das hohe Flächengewicht erforderlich ist, das bisher für erforderlich gehalten wurde.

Die spezifische Dichte des Elastomermaterials der Barriereschicht liegt bevorzugt zwischen 1 und 1,5, besonders bevorzugt im Bereich 1,2 bis 1,3. Die Dicke der Barriereschicht beträgt vorzugsweise 0,5 bis 1,3 mm, weiter vorzugsweise 0,6 bis 1,0 mm. Sie kann aus üblichen Elastomermaterialien hergestellt werden wie beispielsweise Polysiloxanen, Polychloropenen und Polyvinylestern.

Die Dicke einer Absorptionsschicht beträgt vorzugsweise 2 bis 20 mm, weiter vorzugsweise 6 bis 15 mm, besonders 8 bis 12 mm. Das poröse und/oder offenzellige Material kann ein Fasermaterial sein, beispielsweise Filz, ein textiles Gewebe oder ein textiles Gewirke. Es kann sich bevorzugt um ein Glasfasermaterial handeln.

Alternativ kann das poröse und/oder offenzellige Material ein leichter Schaumstoff sein. Das gesamte Flächengewicht des Schalldämmmaterials beträgt bevorzugt 1,7 kg/m² oder weniger, weiter vorzugsweise 1,5 kg/m² oder weniger.

Erfindungsgemäß kann das Schalldämmmaterial eine Barriereschicht und eine Absorptionsschicht aufweisen, alternativ können eine mittig angeordnete Barriereschicht und zwei beidseitig dieser Barriereschicht angeordnete Absorptionsschichten vorgesehen sein. Die durch das erfindungsgemäße Schalldämmmaterial bewirkte Schalldämmung beträgt bevorzugt wenigstens 4 dB/SIL, weiter vorzugsweise wenigstens 5 dB/SIL. Die Angabe "dB/SIL" bezieht sich auf die vom Menschen physiologisch wahrgenommene Schalldämmwirkung bzgl. des sogenannten speech interference levels.

Das erfindungsgemäße Material kann an einem oder mehreren Rändern Randbereiche aufweisen, in denen die Dicke der Absorptionsschicht verglichen mit der Dicke in den mittleren Bereichen vermindert ist. Diese Gestaltung erleichtert die Montage des Schalldämmmaterials in der unten noch näher ausgeführten Art und Weise.

Die verschiedenen Schichten des erfindungsgemäßen Schalldämmmaterials können auf bekannte Art und Weise verbunden, beispielsweise verklebt sein. Erfindungsgemäß ist es jedoch auch möglich, diese Schichten lediglich zusammenzulegen und dann eine Matte des erfindungsgemäßen Materials mit einer Folienumhüllung zu versehen, die die strukturelle Integrität der Matte sicherstellt. Es kann sich um eine übliche Kunststofffolie wie beispielsweise Mylar handeln.

Gegenstand der Erfindung ist ferner ein Flugzeug, bei dem wenigstens ein Teilbereich der Außenhaut an der Innenseite mit einem erfindungsgemäßen Schalldämmmaterial gedämmt ist. Vorzugsweise weist wenigstens ein axiales Teilstück der Außenhaut (bevorzugt ein vorderer Bereich der Außenhaut und damit ein vorderer Bereich der Kabine) eine radial vollständig umlaufende Dämmung auf. In dem entsprechenden axialen Abschnitt der Kabine ist also die Außenhaut rundum gedämmt. Alternativ kann es vorgesehen sein, dass in diesem Bereich der Kabine nicht die gesamte Außenhaut gedämmt wird, sondern ein anderer, den Passagierbereich vollständig radial umschließender Bereich, beispielsweise ein Teil der Außenhaut sowie ein Zwischenboden der Kabine. Auf diese Art und Weise ist es möglich, unter dem gedämmten Passagierbereich einen nicht gedämmten Fracht- oder Funktionsbereich anzuordnen. Bei großen Verkehrsflugzeugen mit zwei oder mehr Ebenen innerhalb der Kabine (beispielsweise dem Airbus A380) ist es gleichfalls denkbar, nur im oberen Bereich die Außenhaut und dann den Zwischenboden zwischen den beiden Kabinenebenen zu dämmen. Auf diese Art und Weise ist eine Dämmung nur im oberen Bereich vorgesehen, in dem üblicherweise die First-Class angeordnet ist.

Das erfindungsgemäße Flugzeug ist vorzugsweise ein kommerzielles Verkehrsflugzeug, der Begriff bezeichnet übliche Verkehrsflugzeuge, die von Linien- oder Charterfluggesellschaften eingesetzt werden. Es weist vorzugsweise wenigstens 80, weiter vorzugsweise wenigstens 100, weiter vorzugsweise wenigstens 200, weiter vorzugsweise wenigstens 300 Fluggastplätze auf.

Zur Sicherung der strukturellen Integrität eines Flugzeugrumpfes weist dieser üblicherweise radial umlaufende Spanten auf, auf denen die Außenhaut aufgebracht ist. Für eine wirksame Dämmung der Innenseite der Außenhaut ist es vorzuziehen, wenn das Schalldämmmaterial nicht nur im Bereich der Außenhaut zwischen den Spanten angeordnet ist, sondern diese ebenfalls abdeckt. In diesem Zusammenhang ist es bevorzugt, wenn Schalldämmmatten einen zentralen Bereich mit einer Breite aufweisen, der dem axialen Abstand zwischen zwei Spanten entspricht. An diesen zentralen Bereich der Matte schließen sich flexible Randbereiche an, in denen die Dicke der Absorptionsschicht vermindert ist. Die Matte wird so zwischen zwei Spanten eingelegt, dass der dicke Zentralbereich zwischen den Spanten an der Außenhaut anliegt und die dünneren Randbereiche sich in einem Winkel von etwa 90 Grad zu dem dickeren Zentralbereich erstrecken und an den Axialflächen der Spanten anliegen. Erfindungsgemäß kann dann weiter vorgesehen sein, dass zusätzlich Überbrückungsstreifen aus erfindungsgemäßem Schalldämmmaterial vorgesehen sind, die etwa U-förmig elastisch verformt werden und mit den an den Spanten anliegenden Randbereichen der Schalldämmmatten verbunden, beispielsweise verklebt werden. Auf diese Art und Weise überdecken die Überbrückungsstreifen die zur Innenseite der Kabine weisenden Kanten der Spanten.

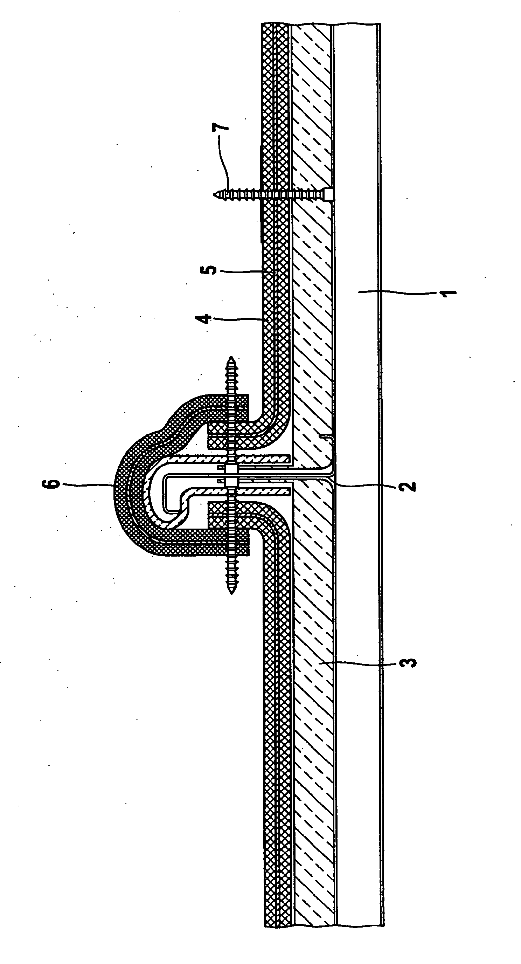

Ein Ausführungsbeispiel der Erfindung wird im Folgenden anhand der Zeichnung beschrieben.

An der Innenseite der Außenwand 1 einer Flugzeugkabine sind in regelmäßigen Abständen in Radialrichtung verlaufende Spanten 2 angeordnet. An der Innenseite der Außenwand 1 ist eine Wärmeisolierung 3 angebracht Das Material 3 ist mittels an der Außenwand 1 angebrachten Stiften 4 befestigt bzw. auf diese aufgesteckt.

Das erfindungsgemäße Schalldämmmaterial ist ebenfalls auf diese Stifte 4 aufgesteckt. Es weist eine 0,7 mm dicke Polysiloxanschicht 5 (Durasonic 5004 der Fa. Duracote) mit einer spezifischen Dichte von 1,671 und einem Flächengewicht von 1,17 kg / m² auf. Beidseitig an der Polysiloxanschicht 5 angeordnet sind Glasfasermaterialschichten 4 mit einer Dicke von jeweils 9,5 mm und einem spezifischen Gewicht von 24 kg / m³, so dass diese beiden Faserschichten ein Flächengewicht von zusammen 0,46 kg / m² aufweisen.

Im Bereich der Spanten 2 werden nebeneinander liegende Schalldämmmatten schalldicht verbunden durch ein die Innenkanten der Spanten überbrückendes Schalldämmmaterial 6 mit erfindungsgemäßen Aufbau.

Die gezeigte Ausführungsform weist beidseitig der Barriereschicht angeordnete Absorptionsschichten auf, das Flächengewicht des Schalldämmmaterials beträgt 1,63 kg/m². Bei der Belegung der Barriereschicht mit lediglich einer Absorptionsschicht kann das Flächengewicht auf 1,39 kg /m² vermindert werden.

## Patentansprüche

1. Schalldämmmaterial für die Dämmung in Flugzeugen, mit wenigstens einer Barriereschicht und wenigstens einer Absorptionsschicht, wobei die Barriereschicht ein Elastomermaterial mit einem Flächengewicht von 1,3 kg/m² oder weniger aufweist, die Absorptionsschicht ein poröses und/oder offenzelliges Material mit einem Volumengewicht von 4 bis 50 kg/m³, vorzugsweise 10 bis 40 kg/m³, weiter vorzugsweise 15 bis 35 kg/m³, weiter vorzugsweise 20 bis 30 kg/m³ aufweist und das Flächengewicht des Schalldämmmaterials 2 kg/m² oder weniger beträgt
**dadurch gekennzeichnet, dass**
die Barriereschicht eine spezifische Dichte zwischen 1 und 1,3 aufweist.

2. Schalldämmmaterial nach Anspruch 1, **dadurch gekennzeichnet, dass** die Dicke der Barriereschicht 0,5 bis 1,5 mm, vorzugsweise 0,6 bis 1,0 mm beträgt.

3. Schalldämmmaterial nach einem der Ansprüche 1 oder 2, **dadurch gekennzeichnet, dass** das Elastomermaterial ausgewählt ist aus der Gruppe bestehend aus Polysiloxanen, Polychloropenen und Polyvinylestern.

4. Schalldämmmaterial nach einem der Ansprüche 1 bis 3, **dadurch gekennzeichnet, dass** die Dicke einer Absorptionsschicht 2 bis 20 mm, vorzugsweise 6 bis 15 mm, weiter vorzugsweise 8 bis 12 mm beträgt.

5. Schalldämmmaterial nach einem der Ansprüche 1 bis 4, **dadurch gekennzeichnet, dass** das poröse und/oder offenzellige Material ein Fasermaterial ist.

6. Schalldämmmaterial nach Anspruch 5, **dadurch gekennzeichnet, dass** das poröse und/oder offenzellige Material ausgewählt ist aus der Gruppe bestehend aus Filz, textilen Geweben und textilen Gewirken.

7. Schalldämmmaterial nach Anspruch 5 oder 6, **dadurch gekennzeichnet, dass** das Fasermaterial Glasfasern enthält.

8. Schalldämmmaterial nach einem der Ansprüche 1 bis 4, **dadurch gekennzeichnet, dass** das poröse und/oder offenzellige Material ein Schaumstoff ist.

9. Schalldämmmaterial nach einem der Ansprüche 1 bis 8, **dadurch gekennzeichnet, dass** das Flächengewicht des Schalldämmmaterials 1,7 kg/m² oder weniger, bevorzugt 1,5 kg/m² oder weniger beträgt.

10. Schalldämmmaterial nach einem der Ansprüche 1 bis 9, **dadurch gekennzeichnet, dass** es eine Barriereschicht und eine Absorptionsschicht aufweist.

11. Schalldämmmaterial nach einem der Ansprüche 1 bis 9, **dadurch gekennzeichnet, dass** es eine Barriereschicht und zwei beidseitig der Barriereschicht angeordnete Absorptionsschichten aufweist.

12. Schalldämmmaterial nach einem der Ansprüche 1 bis 11, **dadurch gekennzeichnet, dass** es eine Dämmung von wenigstens 4 dB/SIL, vorzugsweise wenigstens 5 dB/SIL aufweist.

13. Schalldämminaterial nach einem der Ansprüche 1 bis 12, **dadurch gekennzeichnet, dass** es an einem oder mehreren Rändern Randbereich aufweist, in denen die Dicke der Absorptionsschicht vermindert ist.

14. Schalldämmmaterial nach einem der Ansprüche 1 bis 13, **dadurch gekennzeichnet, dass** es zusätzlich eine Folienumfüllung aufweist.

15. Flugzeug, **dadurch gekennzeichnet, dass** wenigstens ein Teilbereich der Außenhaut an der Innenseite mit einem Schalldämmmaterial nach einem der Ansprüche 1 bis 14 gedämmt ist.

16. Flugzeug nach Anspruch 15, **dadurch gekennzeichnet, dass** wenigstens ein axiales Teilstück der Außenhaut eine radial vollständig umlaufende Dämmung aufweist.

17. Flugzeug nach Anspruch 16, **dadurch gekennzeichnet, dass** ein.in der vorderen Hälfte angeordneter Teilbereich der Außenhaut gedämmt ist.

18. Flugzeug nach einem der Ansprüche 15 bis 17, **dadurch gekennzeichnet, dass** es ein kommerzielles Verkehrsflugzeug ist.

19. Flugzeug nach Anspruch 18, **dadurch gekennzeichnet, dass** es wenigstens 80, vorzugsweise wenigstens 100, weiter vorzugsweise wenigstens 200, weiter vorzugsweise wenigstens 300 Fluggastplätze aufweist.

20. Flugzeug nach einem der Ansprüche 15 bis 19, **dadurch gekennzeichnet, dass** es mit einem Schalldämmmaterial nach Anspruch 14 gedämmt ist, wobei dieses Schalldämmmaterial an zwei gegenüberliegenden Rändern Randbereiche aufweist, in denen die Dicke der Absorptionsschicht vermindert ist; wobei die Breite des Schalldämmmaterials zwischen zwei solchen Randbereichen etwa dem Abstand zwischen zwei Spanten der Außenhaut entspricht; wobei jeweils Abschnitte des Schalldämmmaterials zwischen zwei Spanten eingelegt werden, und wobei die Randbereiche, in denen die Dicke der Absorptionsschicht vermindert ist, an den in Axialrichtung weisenden Flächen der Spanten anliegen.

21. Flugzeug nach Anspruch 20, **dadurch gekennzeichnet, dass** zusätzlich Überbrückungsstreifen von Schalldämmmaterial vorgesehen sind, die überlappend mit dem zwischen die Spanten eingelegten Schalldämmmaterial die in Radialrichtung weisenden Kanten der Spanten überdecken.

## Claims

1. A sound-proofing material for insulation in aircraft, with at least one barrier layer and at least one absorption layer, wherein the barrier layer has an elastomeric material with a weight per unit area of 1.3 kg/m² or lower, the absorption layer has a porous and/or open-cell material with a weight by volume of 4 to 50 kg/m³, preferably 10 to 40 kg/m³, more preferably 15 to 35 kg/m³, more preferably 20 to 30 kg/m³, and the weight per unit area of the sound-proofing material is 2 kg/m² or lower,
**characterised in that**
the barrier layer has a specific density of between 1 and 1.3.

2. A sound-proofing material according to Claim 1, **characterised in that** the thickness of the barrier layer is 0.5 to 1.5 mm, preferably 0.6 to 1.0 mm.

3. A sound-proofing material according to either Claim 1 or Claim 2, **characterised in that** the elastomeric material is chosen from the group comprising polysiloxanes, polychloroprenes [sic] and polyvinyl esters.

4. A sound-proofing material according to any one of Claims 1 to 3, **characterised in that** the thickness of an absorption layer is 2 to 20 mm, preferably 6 to 15 mm, more preferably 8 to 12 mm.

5. A sound-proofing material according to any one of Claims 1 to 4, **characterised in that** in the porous and/or open-cell material is a fibrous material

6. A sound-proofing material according to Claim 5, **characterised in that** the porous and/or open-cell material is chosen from the group comprising felt, textile fabrics and knitted textile fabrics.

7. A sound-proofing material according to Claim 5 or 6, **characterised in that** the fibrous material contains glass fibres.

8. A sound-proofing material according to any one of Claims 1 to 4, **characterised in that** the porous and/or open-cell material is a foamed material.

9. A sound-proofing material according to any one of Claims 1 to 8, **characterised in that** the weight per unit area of the sound-proofing material is 1.7 kg/m² or lower, preferably 1.5 kg/m² or lower.

10. A sound-proofing material according to any one of Claims 1 to 9, **characterised in that** it has a barrier layer and an absorption layer.

11. A sound-proofing material according to any one of Claims 1 to 9, **characterised in that** has a barrier layer and two absorption layers arranged on either side of the barrier layer.

12. A sound-proofing material according to any one of Claims 1 to 11, **characterised in that** it provides a sound insulation of at least 4 dB SIL, preferably at least 5 dB SIL.

13. A sound-proofing material according to any one of Claims 1 to 12, **characterised in that** on one or more edges it has edge zones in which the thickness of the absorption layer is reduced.

14. A sound-proofing material according to any one of Claims 1 to 13, **characterised in that** it additionally has a foil covering.

15. An aircraft, **characterised in that** at least one portion of the outer skin is insulated on the inside with a sound-proofing material according to any one of Claims 1 to 14.

16. An aircraft according to Claim 15, **characterised in that** at least one axial section of the outer skin has continuous radial insulation surrounding it.

17. An aircraft according to Claim 16, **characterised in that** a portion of the outer skin arranged in the front half is insulated.

18. An aircraft according to any one of Claims 15 to 17, **characterised in that** it is a commercial passenger aeroplane.

19. An aircraft according to Claim 18 , **characterised in that** it has at least 80, preferably at least 100, more preferably at least 200, more preferably at least 300 passenger seats.

20. An aircraft according to any one of Claims 15 to 19, **characterised in that** it is insulated with a sound-proofing material according to Claim 14, wherein this sound-proofing material has edge zones on two opposing edges, in which the thickness of the absorption layer is reduced; wherein the thickness of the sound-proofing material between two such edge zones corresponds approximately to the distance between two ribs of the outer skin; wherein in each case portions of the sound-proofing material are inserted between two ribs, and wherein the edge zones, in which the thickness of the absorption layer is reduced, abut against the surfaces of the ribs facing in an axial direction.

21. An aircraft according to Claim 20, **characterised in that** additionally bridging strips of sound-proofing material are provided which, overlapping the sound-proofing material inserted between the ribs, cover the edges of the ribs facing in a radial direction.

## Revendications

1. Matériau d'insonorisation pour l'insonorisation dans des avions, comportant au moins une couche barrière et au moins une couche d'absorption, la couche barrière comprenant un matériau élastomère ayant une masse au mètre carré de 1,3 kg/m² ou moins, la couche d'absorption comprenant un matériau poreux et/ou à alvéoles ouverts ayant une masse volumique de 4 à 50 kg/m³, de préférence 10 à 40 kg/m³, de manière davantage préférée 15 à 35 kg/m³, de manière davantage préférée 20 à 30 kg/m³ et la masse au mètre carré du matériau d'insonorisation étant de 2 kg/m² ou moins
**caractérisé en ce que**
la couche barrière présente une épaisseur spécifique comprise entre 1 et 1,3.

2. Matériau d'insonorisation selon la revendication 1, **caractérisé en ce que** l'épaisseur de la couche barrière est de 0,5 à 1,5 mm, de préférence de 0,6 à 1,0 mm.

3. Matériau d'insonorisation selon l'une quelconque des revendications 1 ou 2, **caractérisé en ce que** le matériau élastomère est choisi dans le groupe constitué par les poly(siloxanes), les poly(chloroprènes) et les poly(esters de vinyle).

4. Matériau d'insonorisation selon l'une quelconque des revendications 1 à 3, **caractérisé en ce que** l'épaisseur d'une couche d'absorption est de 2 à 20 mm, de préférence 6 à 15 mm, de manière davantage préférée 8 à 12 mm.

5. Matériau d'insonorisation selon l'une quelconque des revendications 1 à 4, **caractérisé en ce que** le matériau poreux et/ou à alvéoles ouverts est un matériau fibreux.

6. Matériau d'insonorisation selon la revendication 5, **caractérisé en ce que** le matériau poreux et/ou à alvéoles ouverts est choisi dans le groupe constitué par le feutre, les tissés textiles et les maillages textiles.

7. Matériau d'insonorisation selon la revendication 5 ou 6, **caractérisé en ce que** le matériau fibreux contient des fibres de verre.

8. Matériau d'insonorisation selon l'une quelconque des revendications 1 à 4, **caractérisé en ce que** le matériau poreux et/ou à alvéoles ouverts est une mousse synthétique.

9. Matériau d'insonorisation selon l'une quelconque des revendications 1 à 8, **caractérisé en ce que** la masse au mètre carré du matériau d'insonorisation est de 1,7 kg/m² ou moins, de préférence 1,5 kg/m² ou moins.

10. Matériau d'insonorisation selon l'une quelconque des revendications 1 à 9, **caractérisé en ce qu'**il comprend une couche barrière et une couche d'absorption.

11. Matériau d'insonorisation selon l'une quelconque des revendications 1 à 9, **caractérisé en ce qu'**il comprend une couche barrière et deux couches d'absorption disposées de manière bilatérale par rapport à la couche barrière.

12. Matériau d'insonorisation selon l'une quelconque des revendications 1 à 11, **caractérisé en ce qu'**il comprend une insonorisation d'au moins 4 dB/SIL, de préférence au moins 5 dB/SIL.

13. Matériau d'insonorisation selon l'une quelconque des revendications 1 à 12, **caractérisé en ce qu'**il comprend un ou plusieurs bords au niveau des zones de bord, dans lesquels l'épaisseur de la couche d'absorption est réduite.

14. Matériau d'insonorisation selon l'une quelconque des revendications 1 à 13, **caractérisé en ce qu'**il comprend de plus une enveloppe en feuille.

15. Avion **caractérisé en ce qu'**au moins une partie du revêtement extérieur au niveau du côté intérieur est insonorisée avec un matériau d'insonorisation selon l'une quelconque des revendications 1 à 14.

16. Avion selon la revendication 15, **caractérisé en ce qu'**au moins une partie axiale du revêtement extérieur comprend une insonorisation s'étendant complètement de manière radiale.

17. Avion selon la revendication 16, **caractérisé en ce qu'**une partie du revêtement extérieur agencée dans la partie avant est insonorisée.

18. Avion selon l'une quelconque des revendications 15 à 17, **caractérisé en ce qu'**il s'agit d'un avion de ligne commerciale.

19. Avion selon la revendication 18, **caractérisé en ce qu'**il comprend au moins 80, de préférence au moins 100, de manière davantage préférée au moins 200, de manière davantage préférée au moins 300 places pour des passagers.

20. Avion selon l'une quelconque des revendications 15 à 19, **caractérisé en ce qu'**il est insonorisé avec un matériau d'insonorisation selon la revendication 14, le matériau d'insonorisation présentant au niveau de ses zones de bord deux bords opposés, dans lesquels l'épaisseur de la couche d'absorption est réduite ; la largeur du matériau d'insonorisation entre deux telles zones de bord correspondant à peu près à l'espacement entre les deux couples du revêtement extérieur ; chaque partie du matériau d'insonorisation étant insérée entre deux couples, et les zones de bord, dans lesquelles l'épaisseur de la couche d'absorption est réduite, étant plaquées aux surfaces pointant dans une direction axiale des couples.

21. Avion selon la revendication 20, **caractérisé en ce que** des bandes de pontage supplémentaires de matériau d'insonorisation sont prévues, lesquelles, avec le matériau d'insonorisation inséré entre les couples, recouvrent de manière chevauchante des arêtes des couples pointant dans une direction radiale.
